# EUROPÄISCHE PATENTSCHRIFT

(11) **EP 2 547 903 B1**
(45) Veröffentlichungstag und Bekanntmachung des Hinweises auf die Patenterteilung: **19.03.2014**
(21) Anmeldenummer: 11707994.7
(22) Anmeldetag: 15.01.2011
(51) Int. Cl.: F03D 1/00, F03D 11/00, F03D 11/04

(54) **VERFAHREN ZUR ÜBERPRÜFUNG DES BAULICHEN ZUSTANDS VON WINDKRAFTANLAGEN**
METHOD FOR DIAGNOSING THE STRUCTURAL CONDITION OF WIND GENERATORS
PROCÉDÉ DE CONTRÔLE DE L'ÉTAT STRUCTURAL D'ÉOLIENNES

(30) Priorität: 23.08.2010 DE 102010035148; 13.10.2010 DE 102010048400; 19.08.2010 DE 102010034756; 24.06.2010 DE 102010024977; 15.03.2010 DE 102010011403
(43) Veröffentlichungstag der Anmeldung: 23.01.2013
(73) Patentinhaber: Zell, Horst, 45481 Mülheim an der Ruhr (DE)
(72) Erfinder: Zell, Horst, 45481 Mülheim an der Ruhr (DE)
(74) Vertreter: Braun-Dullaeus, Karl-Ulrich
(86) Internationale Anmeldenummer: PCT/DE2011/000041
(87) Internationale Veröffentlichungsnummer: WO 2011/113402

(56) Entgegenhaltungen:
- WO-A1-2010/051278
- DE-A1-102008 053 928
- DE-B3-102007 059 502
- US-A1- 2005 042 102
- MEINLSCHMIDT P ET AL: "Thermographic inspection of rotor blades", INTERNET CITATION, 26. September 2006 (2006-09-26), Seiten 1-9, XP002525987, ISSN: 1435-4934 Gefunden im Internet: URL:http://www.ndt.net/article/ecndt2006/d oc/Tu.1.5.3.pdf [gefunden am 2009-04-29]

## Beschreibung

Die Erfindung betrifft ein Verfahren zu Überprüfung des baulichen Zustands von Windkraftanlagen in Form von mehrere Rotorblätter aufweisenden Windrädern.

Außerdem betrifft die Erfindung eine Vorrichtung zur Durchführung des Verfahrens zur Überprüfung des baulichen Zustands von Windkraftanlagen.

Im Zuge der wachsenden Bedeutung von regenerativen Energien werden in den vergangenen Jahren international verstärkt Windkraftanlagen gebaut. Wegen der oberhalb von Gewässern, insbesondere der Meere herrschenden starken Winde werden auch mehr und mehr offshore Windkraftanlagen gebaut. Diese bringen den zusätzlichen Vorteil mit sich, dass sie, an weniger attraktiven Abschnitten positioniert, nicht die Landschaft beeinträchtigen. Die Windkraftanlagen müssen, wie andere Industrieanlagen auch, in regelmäßigen Intervallen gewartet werden. Dies gilt für Windkraftanlagen umso mehr, als sie hohen dynamischen Belastungen ausgesetzt sind. Überprüfungen des baulichen Zustands vor allem der Rotorblätter müssen daher in vergleichsweise kurzen Abständen veranlasst werden.

Diese Inspektionen sind zunächst speziell bei offshore Windkraftanlagen dahingehend problematisch, dass das Personal per Boot zu dem jeweiligen Windrad gelangen muss. Innerhalb des Turms befindet sich ein Aufstieg, die anschließenden Inspektionsarbeiten gerade an den Rotorblättern erfordern hohe akrobatische Fähigkeiten. Die entsprechenden Personen müssen über eine Hochgebirgsausbildung ähnlich Bergsteigern verfügen, weil sich diese dann einzeln an den Rotorblättern abseilen müssen, um deren jeweiligen baulichen Zustand zu überprüfen. Dies wiederum setzt voraus, dass sich das jeweilige Rotorblatt zumindest annähernd in der Sechsuhrstellung befindet. Ist die Überprüfung des ersten Rotorblattes abgeschlossen, muss das Windrad gedreht und das als nächstes zu überprüfende Rotorblatt in die Sechsuhrstellung gebracht werden. Dass dies mit einigem Aufwand zusammenhängt, liegt auf der Hand. Die Stillstandszeiten bei diesen Arbeiten und die damit einhergehenden Kosten wegen des ausfallenden Betriebs sind erheblich. Die Überprüfung des baulichen Zustands der Rotorblätter, in erster Linie also die Überprüfung auf entstandene Risse oder anderer Zerstörungen geschieht dann z.B. mittels eines Kontrastmittels, welches auf die Außenhaut des jeweiligen Rotorblattes aufgebracht wird. Dies wiederum setzt voraus, dass die Rotorblätter einigermaßen sauber sind, was wegen der hohen Beanspruchung speziell bei offshore Windkraftanlagen durch die Verdampfung des Meerwassers ein zusätzliches erhebliches Problem in der Praxis darstellt.

Das Dokument "MEINLSCHMIDT P ET AL: "Thermographic inspection of rotor blades", ECNDT 2006, 26. September 2006 (2006-09-26), Seiten 1-9, XP002525987, (im Internet unter http://www.ndt.net/article/ecndt2006/doc/Tu.1.5.3.pdf)" zeigt ein Verfahren zur Inspektion von Rotorblättern, welches aus einer Distanz z.B. von einem Fahrzeug aus mittels thermographischer Aufnahmen ausgeführt wird.

Damit stellt sich der vorliegenden Erfindung die Aufgabe, ein Verfahren und eine Vorrichtung zur Überprüfung des baulichen Zustands von Windkraftanlagen, insbesondere von offshore Windkraftanlagen zu schaffen, das sich durch allenfalls kurze Stillstandszeiten für die Windräder und sichere Messergebnisse auszeichnet.

Diese Aufgabe wird verfahrensgemäß dadurch gelöst, dass die die Windkraftanlage bildenden Windräder der Reihe nach von einem Hubschrauber aus erfasst werden, dass die Rotorblätter oder Teile von diesen einzeln von einer oder mehreren an und/order in dem Hubschrauber installierten Kameras mittels Terahertz-Wellen gescannt werden und dass die dabei ermittelten Daten gespeichert und anschließend einer Auswertung mit einer Software-Einheit zur Aufarbeitung und/oder Standardisierung der erfassten Daten in Hinblick auf etwaige Beschädigungen zurückgeführt werden. Es ist dabei vorgesehen, dass die Rotorblätter eines Windrades einzeln oder gemeinsam mit einer Kamera z.B. mittels Terahertz-Wellen gescannt werden. Das Scannen erfolgt durch die elektronische oder mechanische Zielführung der Erfassungseinheit. D.h. etwa beim Abfliegen des jeweiligen Rotorblattes oder aller Rotorblätter gemeinsam werden die entsprechenden Aufnahmen im Wege des Scannings hergestellt.

Dank der Erfassung sämtlicher notwendigen Daten über eine oder mehrere an und/oder in mobilen Standorten installierten Aufnahmeeinrichtungen reduziert sich der Aufwand zur Erfassung sämtlicher relevanter Messdaten auf ein Minimum. Die Stillstandszeiten für das jeweilige Windrad beschränken sich allenfalls auf die Zeit, die benötigt wird, um die Rotorblätter von diesem Standort aus zu erfassen und die notwendigen Daten aufzunehmen. Geeignet, ist diese Technik sowohl für Windräder mit um eine waagerechte Achse drehenden, zumeist drei Rotorblättern pro Windrad als auch für Windräder mit um eine senkrechte Achse drehenden, zumeist zwei Rotorblättern pro Windrad. Nach ggf. erfolgter Reinigung werden in einer Art erster Einheit zur Datenerfassung die notwendigen Daten über die Aufnahmeeinrichtung erfasst, die geeignet ist, entsprechende Oberflächen, insbesondere aber auch die dahinter liegende Struktur der Rotorblätter aufzunehmen. Anschließend werden die Daten in einer zweiten Einheit gespeichert und schließlich einer dritten Einheit zur Auswertung zugeführt, die an Bord des mobilen Standortes oder auch extern vorgehalten werden kann. In diesem Zusammenhang spielt die jeweilige Stellung des Rotorblattes überhaupt keine Rolle, vielmehr kann von dem mobilen Standort aus jedes Rotorblatt einzeln erfasst werden, ohne dass zwischendurch eine Drehung des Windrades erfolgen müsste. Auch der jeweilige Zustand der Rotorblätter spielt letztlich keine Rolle, weil die Erfassung der Daten unabhängig etwa vom Verschmutzungsgrad der Rotorblätter durchgeführt werden kann. Damit ist ein besonders präzises, schnell durchzuführendes und kostengünstiges Verfahren geschaffen, bei dem sich der Einsatz des Personals auf das Betätigen der jeweiligen Einheiten zum Erfassen, Speichern, Auswerten und Ausgeben der Daten beschränkt. Die für außen an Windrädern tätige Personen speziell auf dem Meer existierende Gefahren bestehen nicht mehr.

Unter einem mobilen Standort wird u.a., wobei nicht alle der aufgeführten Beispiele Teil der Erfindung sind, verstanden, dass ein Luftfahrzeug, ein Wasserfahrzeug oder ein Landfahrzeug eingesetzt wird. Gedacht ist vor allem an für die Durchführung des Verfahrens besonders geeignete Hubschrauber, die sich für solch ein Verfahren in Bezug auf den für die Aufnahmen benötigten Zeitrahmen wie unter dem Gesichtspunkt Exaktheit als besonders geeignet erweisen. Ansonsten an Flugzeuge, Drohnen, Ballone, Zeppeline, Drachen, Paraglider, Gleit- oder Fallschirme. Hinsichtlich Wasserfahrzeugen ist an Schiffe, Pontons oder Arbeitsplattformen zu Wasser gedacht, betreffend Fahrzeuge an LKW, Anhänger, Arbeitsbühnen oder Kräne gedacht. Auch Aufnahmen von benachbarten Windkrafträdern sind praktikabel.

Als bevorzugte Aufnahmeeinrichtung zum Erfassen der Rotorblätter oder Teile von diesen und ihrem Zustand ist daran gedacht, dass die Erfassung der Rotorblätter mittels einer Kamera mittels kurzen und/oder langen Wellen, eines Radar-, Infrarot-, Ultraschall- und/oder Lasergerätes durchgeführt wird. Insbesondere ist an die Erfassung über TeraHerz-Wellen gedacht. Auch ein sich überschneidender bzw. paralleler Einsatz dieser verschiedenen Techniken ist denkbar, um den baulichen Zustand von Windrädern, insbesondere von deren Rotorbtättern zu erfassen und z.B. auch kontrollieren zu können. Auch Unwuchten und Vibrationen der Rotorblätter können so erfasst werden, durch die Rückschlüsse auf Beschädigungen zu ziehen sind.

Dass für das Scannen die Aufnahmeeinrichtung und/oder die Rotorblätter des Windrades bewegt werden können, erhöht die Einsatzmöglichkeiten zusätzlich. Für den Fall, dass die Rotorblätter in der Bewegung erfasst werden, ist also nicht einmal der Stillstand der Anlage Voraussetzung für die Erfassung.

Um die Messergebnisse auch einwandfrei einer Windkraftanlage und insbesondere einem speziellen Rotorblatt oder einer Rotorfläche zuordnen zu können, ist vorgesehen, dass im Rahmen der Erfassung der Rotorblätter oder Teilen von diesen ein mit der Windkraftanlage und/oder dem Rotorblatt zugeordneter Datenträger mit erfasst wird. Dieser ist auf oder an dem jeweiligen Anlagenteil fixiert und dient zur individuellen Identifikation der Windkraftanlage bzw. des

Rotorblatts. Dieser Datenträger wird vor, während oder unmittelbar nach der eigentlichen Erfassung mit aufgenommen, wodurch eine automatische Zuordnung des Messprotokolls mit den jeweiligen Messergebnissen für die Auswertung erfolgen kann. Die in diesen Medien abgelegten Daten werden vor, während und/oder nach der Messung über ein separates oder in die Aufnahmeeinrichtung integriertes Lesegerät erfasst und entsprechend weiterverbreitet. Als Datenträger kommen Barcodes, RFID oder Funk in Frage.

Es wurde bereits darauf hingewiesen, dass besondere Gefahr für die Rotorblätter durch feine Risse und kleinere Beschädigungen in deren Struktur besteht. Dies kann einerseits zu Zerstörungen führen, andererseits nimmt natürlich der Wirkungsgrad solcher Anlagen unter Umständen drastisch ab. Es gilt daher, möglichst präzise Daten sammeln zu können. Es wird daher vorgeschlagen, dass durch die Aufnahmeeinrichtung die Materialdichte des Rotorblattes erfasst wird, unabhängig davon, ob als Aufnahmeeinrichtung eine Kamera zur Messung mittels Kurz- und/oder Langwellen, ein Radar-, Infrarot-, Ultraschall-, Laser- oder sonstiges Gerät dient. Ausgegeben wird dabei eine Art Profil, aus dem sich dann leicht, ggf. durch geeignete Softwareprogramme unterstützt, Unebenheiten, Ungleichmäßigkeiten oder Risse in der Struktur des Rotorblattes feststellen lassen, die mit den bisher bekannten Mitteln bzw. mit bloßem Auge gar nicht zu erkennen wären.

Eine andere Ausführungsform der Erfindung sieht vor, dass als Kamera eine Wärmebildkamera eingesetzt wird. Aus dem durch diese Kamera aufgenommenen Wärmebild lassen sich, wiederum ggf. unterstützt durch geeignete Programme, Stellen mitteilen, an denen die Struktur des Rotorblattes ungleichmäßig ist bzw. an denen Risse drohen oder bereits vorhanden sind und die bei der thermographischen Aufnahme über eine Wärmebildkamera entsprechende Auffälligkeiten darstellen.

Eine Auswertung der ermittelten Daten noch an Bord des Hubschraubers ist denkbar. Gleiches gilt für die Übermittlung der Daten per Funk an einen Zentralrechner in einer Bodenstation oder z.B. auf einem Schiff, um den Platz und das Gewicht hierfür auf dem Hubschrauber zu sparen. Auch zwecks Standardisierung der gesammelten Daten und um diese besser veranschaulichen zu können, ist vorgesehen, dass die ermittelten Werte mittels Software aufgearbeitet werden.

Eine weitere Verfahrensvariante der Erfindung sieht vor, dass die ermittelten Werte mittels Bildkorrelation ausgewertet werden. Mit diesem kamerabasierten Verfahren erfolgt eine Messung der möglichen Verformung der Struktur der zu messenden Rotorblätter.

Gerade in Hinblick auf die Vergleichbarkeit der Daten ist es sinnvoll, wenn die Rotorblätter oder die relevanten Teile von diesen aus einem zumindest annähernd konstanten Abstand zwischen Rotorblatt und Aufnahmeeinrichtung erfasst werden. In dieser Hinsicht wird vorgeschlagen, dass die Daten aus einem Abstand zwischen Rotorblatt und Aufnahmeeinrichtung von ca. 0,01 - 10.000m, vorzugsweise aus einem Abstand von ca. 30 - 60 m erfasst werden. Dabei gilt es natürlich auch, dem notwendigen Sicherheitsabstand zwischen Hubschrauber und Rotorblatt unter Berücksichtung der starken herrschenden Winde, die insbesondere über dem Meer herrschen, Sorge zu tragen.

Die erfindungsgemäße Aufgabe wird vorrichtungsgemäß dadurch gelöst, dass an und/oder in einem Hubschrauber eine oder mehrere Kameras installiert sind, die zur Erfassung der Messdaten für das jeweilige Rotorblatt durch Scannen mittels TeraHerz-Wellen dienen, mit einer Einheit zur Speicherung dieser Daten, mit einer Einheit zur Auswertung dieser Daten, mit einer Software-Einheit zur Überarbeitung und/oder Standardisierung der erfassten Daten und einer Einheit zur Ausgabe der ausgewerteten Daten.

Die Vorrichtung zur Durchführung des erfindungsgemäßen Verfahrens umfasst also letztlich mindestens vier Komponenten. Dabei handelt es sich zunächst um eine Einheit zur Erfassung der relevanten Daten, umfassend einen Hubschrauber, sowie einer oder mehrerer Kameras, die an und/oder in diesem Hubschrauber installiert sind. Der Hubschrauber fliegt die Rotorblätter einzeln oder gemeinsam unabhängig von ihrer Position und ihrem sonstigen Zustand ab. Dabei erfolgt ein Scanning der einzelnen Rotorblätter, bei dem z.B. die Materialdichte des Rotorblattes erfasst oder über eine als Wärmebildkamera ausgebildete Kamera entsprechende Daten gesammelt werden. Ferner umfasst die Vorrichtung eine Einheit zur (Zwischen)Speicherung dieser Daten und eine interne oder externe Einheit zur Auswertung dieser Daten an Bord des Hubschraubers oder in einer Bodenstation zur zentralen Erfassung der Daten. Letztere wird ggf. durch eine Softwareeinheit zur Aufarbeitung bzw. Standardisierung dieser Daten, die das auswertende Personal dann in den Zustand versetzen, sich im wahrsten Sinne des Wortes ein Bild über den baulichen Zustand des überprüften Rotorblatts machen zu können.

Von besonderer Bedeutung ist für die Realisierung des erfindungsgemäßen Verfahrens die Komponente der Aufnahmeeinrichtung zur Erfassung der Rotorblätter oder ihrer relevanten Teile. Als geeignet erscheint es dabei, dass als Aufnahmeeinrichtung eine oder mehrere Kameras, Radar-, Infrarot-, Ultraschall- und/oder Lasergeräte dienen, um die entsprechenden Daten zu erfassen.

Dass der Hubschrauber außerdem mit einer Vorrichtung zur Beaufschlagen der Rotorblätter mit einer Flüssigkeit ausgerüstet ist, dient Zwecken der Säuberung der Rotorblätter etwa durch Dampfstrahlen oder ein Sprühsystem. Auch zur Brandbekämpfung kann diese Vorrichtung mit entsprechend stärkerem Strahl ggf. eingesetzt werden, wenn etwa eine Windkraftanlage Feuer gefangen hat. Das Reinigen der Rotorblätter ist in erster Linie zweckmäßig, zumal sich hier Schmutz und speziell bei Offshore-Windkraftanlagen Salzkristalle absetzen. Dies hat zur Folge, dass die aerodynamische Leistung der Rotorblätter nachlässt und weniger Strom produziert wird. Dieses Reinigen der Rotorblätter erfolgt zurzeit noch per Hand durch die Monteure in aufwändiger Weise bei Stillstand der Rotorblätter und wird jetzt ersetzt durch ein Reinigen vor, während und/oder unmittelbar nach Erfassen der Rotorblätter. Das Reinigen kann auch in einem separaten Arbeitsgang erfolgen. Die Reinigung wird dabei im Stillstand oder im Betrieb der Rotorblätter von dem Hubschrauber durchgeführt. Denkbar ist, dass die Aufnahmeeinrichtung außen auf der einen Seite und die Säuberungsvorrichtung samt Lanze auf der anderen Seite positioniert ist. Ein Tank für die Säuberungsvorrichtung kann sich z. B. an der Unterseite eines Hubschraubers befinden.

Ergänzend hierzu ist daran gedacht, dass der Hubschrauber mit einer Vorrichtung zum Beaufschlagen der Rotorblätter mit einem Lack und/oder einer Versiegelung ausgerüstet ist. Der erfindungsgemäße Hubschrauber wird dabei eingesetzt, um eine Art Schutzhaut, eine Grundierung, eine Farbe, einen Gelcoat, eine Nanoversiegelung oder eine vergleichbare Beschichtung auf die Windkraftanlage oder teile von dieser aufzubringen.

Im Hinblick auf die Ausführung der Kamera ist vorgesehen, dass diese als Wärmebildkamera und/oder als zur Ermittlung der Dichte der Rotorblätter geeignete Kamera ausgebildet ist. Damit können die entsprechenden Daten bezüglich der Struktur bzw. des baulichen Zustands des jeweiligen Rotorblattes präzise ermittelt werden. Auch kleinste oder vor allem verborgene Haarrisse können auf diese Weise schnell erkannt und mit noch vergleichsweise geringem Aufwand und überschaubarem Risiko entfernt werden. Außerdem ist vorgesehen, dass die Einheit zur Auswertung der Daten eine Software-Einheit zur Überarbeitung und/oder Standardisierung der erfassten Daten aufweist.

Zudem ist vorgesehen, dass die Ausgabeeinheit eine Einrichtung zur optischen Wiedergabe der Daten umfasst, beispielsweise einen Monitor.

Die Erfindung zeichnet sich insbesondere dadurch aus, dass ein Verfahren und eine Vorrichtung zur Überprüfung des baulichen Zustands von Windrädern, speziell solche in offshore Windkraftanlagen, geschaffen sind, mit denen eine sichere, schnelle und kostengünstige Überprüfung möglich ist. Als Aufnahmeeinrichtungen für die entsprechenden Daten zu den Windrädern sind Kameras zur Aufnahme von bewegten oder unbewegten Bildern, Radar-, Infrarot-, Ultraschall- und/oder Laseranlagen besonders gut geeignet. Entscheidend ist dabei der Einsatz eines Hubschraubers anstatt von Personal, das sich an den Rotorblättern abseilen muss, mit einer oder mehreren Kameras, über welche der aktuelle bauliche Zustand jedes Rotorblattes in zuverlässiger Weise ermittelt werden kann, indem eine Erfassung der Materialdichte des Rotorblattes oder dessen Erfassung über eine Wärmebildkamera erfolgt. Durch den Einsatz eines Hubschraubers ist ein flexibler Einsatz möglich, der insbesondere völlig unabhängig in Form, Art und Größe des zu überprüfenden Windrades ist. Denkbar ist der Einsatz an um eine horizontale Achse drehbar gelagerten Rotorblättern ebenso wie an um eine vertikale Achse drehbar gelagerten. Eine entsprechende Vorrichtung umfasst neben der durch Hubschrauber und Kameras gebildeten Erfassungseinheit eine Speicher-, eine Auswertungs- und eine Datenausgabeeinheit.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Hubschrauber im Einsatz an einem Windrad
- Figur 2: eine Variante zu Figur 1 und
- Figur 3: ein vereinfachtes Schema der Vorrichtung zur Durchführung des Verfahrens

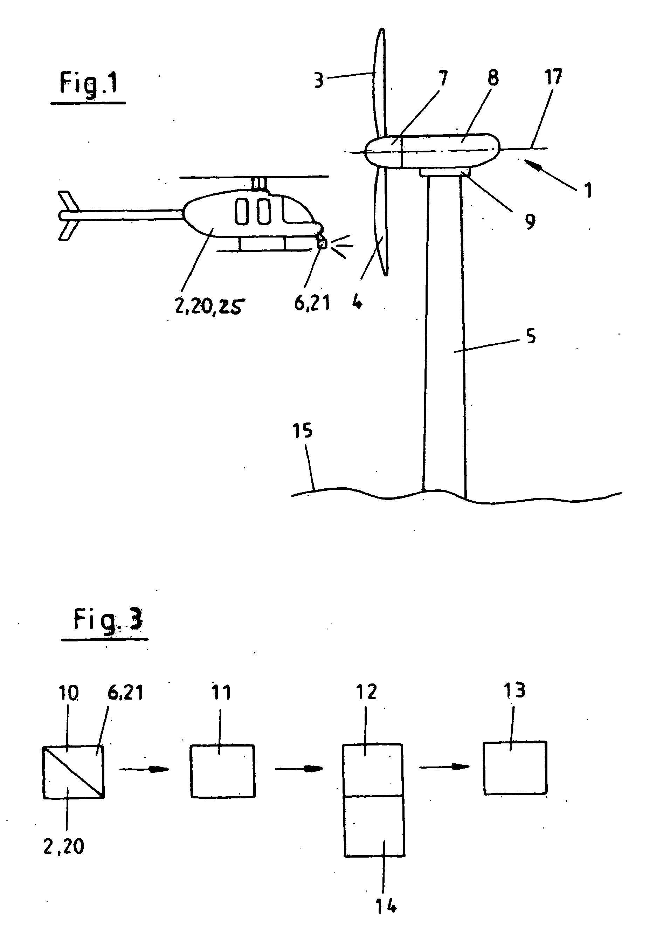

Figur 1 zeigt ein Windrad 1 als Bestandteil einer Windkraftanlage in einem Gewässer, zu dessen Veranschaulichung der Wasserspiegel angedeutet und mit dem Bezugszeichen 15 versehen ist. Das Windrad 1 umfasst einen im Meeresboden verankerten Turm 5, auf dem das eigentliche Windrad positioniert ist. Mit den Bezugszeichen 3 und 4 sind hier zwei um eine Horizontalachse 17 drehbare Rotorblätter bezeichnet, mit 7 die Nabe und mit 8 die so genannte Gondel, welche drehbar auf der Windrichtungsnachführung 9 angeordnet ist. Dieses Windrad 1, genauer gesagt sein Rotorblatt 4, wird in der Darstellung gemäß Figur 1 gerade von einem als Hubschrauber 2 ausgebildeten Luftfahrzeug 25 als mobiler Standort 20 bzw. einer darauf installierten, als Kamera 6 ausgebildeten Aufnahmeeinrichtung 21 erfasst. Die Positionierung der Rotorblätter 3, 4 ist dabei ebenso gleichgültig wie deren Zustand, insbesondere müssen sie vor der hier dargestellten Erfassung nicht von Verunreinigungen befreit werden.

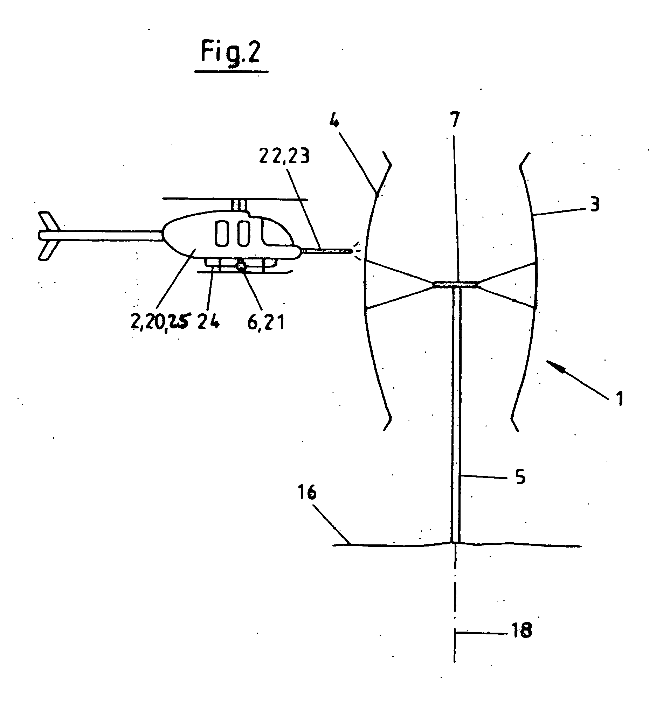

Ein zu Land 16 installiertes Windrad 1, das gerade von einem Hubschrauber 2 erfasst wird, zeigt Figur 2. Es handelt sich hierbei um eine Windkraftanlage 1 mit zwei Rotorblättern 3, 4, die um den Turm 5, genauer gesagt um die vertikale Achse 18, drehbar gelagert sind.

In Figur 3 ist schematisch der Ablauf des erfindungsgemäßen Verfahrens repräsentiert durch die aus den vier Einheiten 10, 11, 12, 13 gebildete Vorrichtung, dargestellt. Vor deren Einsatz erfolgt ggf. eine Säuberung über die ebenfalls auf dem Hubschrauber 2 installierte Vorrichtung 22, von der hier insbesondere eine Lanze 23 und ein Tank 24 zur Vorhaltung von Reinigungsmittel und/oder Wasser gezeigt ist. In einer Art vorgeschaltetem Arbeitsgang erfolgt dabei insbesondere eine Säuberung der Rotorblätter 3, 4 von Verunreinigungen wie Salzkristallen, welche die Messung erschweren bzw. verfälschen würden. Die erste Einheit 10 dient zur Erfassung der Daten durch die Kamera 6, hier seitlich installiert an dem Hubschrauber 2, die zusammen diese Erfassungseinheit 10 darstellen. Anschließend erfolgt über die Einheit 11 eine (Zwischen)Speicherung dieser Daten und dann über die Einheit 12 eine Auswertung, wobei ggf. eine Softwareeinheit Unterstützung liefert. Anschließend erfolgt die Ausgabe der Daten über die entsprechende Einheit 13.

## Patentansprüche

1. Verfahren zur Überprüfung des baulichen Zustands von Windkraftanlagen in Form von mehrere Rotorblätter aufweisenden Windrädern,
**dadurch gekennzeichnet,**
**dass** die die Windkraftanlage bildenden Windräder der Reihe nach von einem Hubschrauber aus erfasst werden, dass die Windkraftanlage, die Rotorblätter oder Teile von diesen einzeln von einer oder mehreren an und/oder in dem Hubschrauber, installierten Kameras gescannt werden und dass die dabei ermittelten Daten gespeichert und anschließend einer Auswertung mit einer Software-Einheit zur Aufarbeitung und/oder Standardisierung der erfassten Daten in Hinblick auf etwaige Beschädigungen zugeführt werden.

2. Verfahren nach Anspruch 1,
**dadurch gekennzeichnet,**
**dass** die Erfassung der Rotorblätter mittels Terahertz-Wellen durchgeführt wird.

3. Verfahren nach Anspruch 1,
**dadurch gekennzeichnet,**
**dass** für das Scannen die Aufnahmeeinrichtung und/oder die Rotorblätter des Windrades bewegt werden.

4. Verfahren nach Anspruch 1,
**dadurch gekennzeichnet,**
**dass** im Rahmen der Erfassung der Rotorblätter oder Teilen von diesen ein der Windkraftanlage und/oder dem Rotorblatt zugeordneter Datenträger mit erfasst wird.

5. Verfahren nach Anspruch 1,
**dadurch gekennzeichnet,**
**dass** durch die Aufnahmeeinrichtung die Materialdichte des Rotorblattes erfasst wird.

6. Verfahren nach Anspruch 1,
**dadurch gekennzeichnet,**
**dass** als Kamera eine Wärmebildkamera eingesetzt wird.

7. Verfahren nach Anspruch 1,
**dadurch gekennzeichnet,**
**dass** die ermittelten Werte mittels Software aufgearbeitet werden.

8. Verfahren nach Anspruch 1,
**dadurch gekennzeichnet,**
**dass** die ermittelten Werte mittels Bildkorrelation ausgewertet werden.

9. Verfahren nach Anspruch 1,
**dadurch gekennzeichnet,**
**dass** die Daten aus einem Abstand zwischen Rotorblatt und Aufnahmeeinrichtung von ca. 0,01 m - 10.000 m, vorzugsweise aus einem Abstand von ca. 30 - 60 m erfasst werden.

10. Vorrichtung zur Durchführung eines Verfahrens zur Überprüfung des baulichen Zustands von Windkraftanlagen in Form von mehrere Rotorblätter (3, 4) aufweisenden Windrädern (1), nach mindestens einem der Ansprüche 1 - 9,
**gekennzeichnet durch**
einen Hubschrauber, an und/oder in dem eine oder mehrere Kameras installiert sind, die zur Erfassung der Messdaten für das jeweilige Rotorblatt (3, 4) **durch** Scannen dienen, mit einer Einheit (11) zur Speicherung dieser Daten, mit einer Einheit (12) zur Auswertung dieser Daten, mit einer Software-Einheit zur Überarbeitung und/oder Standardisierung der erfassten Daten und einer Einheit (13) zur Ausgabe der ausgewerteten Daten.

11. Vorrichtung nach Anspruch 10,
**dadurch gekennzeichnet,**
**dass** die Kamera als Wärmebildkamera und/oder als zur Ermittlung der Dichte der Rotorblätter (3, 4) geeignete Kamera ausgebildet ist.

12. Vorrichtung nach Anspruch 10,
**dadurch gekennzeichnet,**
**dass** der Hubschrauber mit einer Vorrichtung zur Säuberung (22) der Rotorblätter (3, 4) ausgerüstet ist.

13. Vorrichtung nach Anspruch 10,
**dadurch gekennzeichnet,**
**dass** der Hubschrauber, mit einer Vorrichtung zum Beaufschlagen der Rotorblätter (3, 4) mit einer Flüssigkeit ausgerüstet ist.

14. Vorrichtung nach Anspruch 10
**dadurch gekennzeichnet,**
**dass** der Hubschrauber mit einer Vorrichtung zum Beaufschlagen der Rotorblätter (3, 4) mit einem Lack und/oder einer Versiegelung ausgerüstet ist.

15. Vorrichtung nach Anspruch 10,
**dadurch gekennzeichnet,**
**dass** die Ausgabeeinheit (13) eine Einrichtung zur optischen Wiedergabe der Daten umfasst.

## Claims

1. Method for the inspection of the structural condition of wind power plants in the form of wind turbines comprising a plurality of rotor blades,
**characterized in that**
the wind turbines forming the wind power plant are recorded in turn by a helicopter, that the wind power plant, the rotor blades or parts thereof are scanned individually by one or more cameras, which are installed on and/or in the helicopter, and that the determined data is saved and then supplied to an evaluation using a software unit for the re-processing and/or standardization of the recorded data, with respect to possible damage.

2. Method according to claim 1,
**characterized in**
**that** the recording of the rotor blades is carried out by means of terahertz waves.

3. Method according to claim 1,
**characterized in**
**that** for the scanning, the recording device and/or the rotor blades of the wind turbine are moving.

4. Method according to claim 1,
**characterized in**
**that** as part of the recording of the rotor blades or parts thereof, a data carrier associated with the wind power plant and/or the rotor blade is also recorded.

5. Method according to claim 1,
**characterized in**
**that** the material density of the rotor blade is recorded by the recording device.

6. Method according to claim 1,
**characterized in**
**that** a thermographic camera is used as the camera.

7. Method according to claim 1,
**characterized in**
**that** the determined values are processed by means of software.

8. Method according to claim 1,
**characterized in**
**that** the determined values are evaluated by means of image correlation.

9. Method according to claim 1,
**characterized in**
**that** the data is recorded from a distance between the rotor blade and the recording device of about 0,01 m - 10.000 m, preferably from a distance of about 30 - 60 m.

10. Apparatus for carrying out a method for the inspection of the structural condition of wind power plants in the form of wind turbines (1) comprising a plurality of rotor blades (3, 4) according to at least one of claims 1 - 9,
**characterized by**
a helicopter, on and/or in which one or more cameras are installed, which are used for recording the measurement data for the respective rotor blade (3, 4), by means of scanning, comprising a unit (11) for storing this data, comprising a unit (12) for evaluating this data, comprising a software unit for revising and/or standardizing the recorded data and a unit (13) to output the evaluated data.

11. Method according to claim 10,
**characterized in**
**that** the camera is configured as a thermographic camera and/or as a camera suitable for determining the density of the rotor blades (3, 4).

12. Method according to claim 10,
**characterized in**
**that** the helicopter is equipped with a device (22) to clean the rotor blades (3,4).

13. Method according to claim 10,
**characterized in**
**that** the helicopter is equipped with a device to apply a liquid to the rotor blades (3, 4).

14. Method according to claim 10,
**characterized in**
**that** the helicopter is equipped with a device to apply a coating and/or a seal to the rotor blades (3, 4).

15. Method according to claim 10,
**characterized in**
**that** the output unit (13) includes a device for the visual reproduction of the data.

## Revendications

1. Procédé de contrôle de l'état structural d'installations éoliennes sous forme de roues éoliennes présentant plusieurs pales de rotor,
**caractérisé en ce**
**que** les roues éoliennes formant l'installation éolienne sont détectées en rangée par un hélicoptère, en ce que l'installation éolienne, les pales de rotor ou des parties de celles-ci sont scannées par une ou plusieurs caméras installées sur et/ou dans l'hélicoptère et en ce que les données ainsi déterminées sont mémorisées et ensuite soumises à une évaluation avec une unité logicielle à des fins de traitement et/ou standardisation des données détectées en ce qui concerne les éventuelles détériorations.

2. Procédé selon la revendication 1,
**caractérisé en ce**
**que** la détection des pales de rotor est effectuée au moyen d'ondes terahertz.

3. Procédé selon la revendication 1,
**caractérisé en ce**
**que** en vue du scannage, le dispositif de réception et/ou les pales de rotor de la roue éolienne sont mis en mouvement.

4. Procédé selon la revendication 1,
**caractérisé en ce**
**que** dans le cadre de la détection des pales de rotor ou des parties de celles-ci, un support de données affecté à l'installation éolienne et/ou à la pale de rotor est détecté conjointement.

5. Procédé selon la revendication 1,
**caractérisé en ce**
**que** le dispositif de réception détecte l'épaisseur de matériau de la pale de rotor.

6. Procédé selon la revendication 1,
**caractérisé en ce**
**que** la caméra employée est une caméra thermique.

7. Procédé selon la revendication 1,
**caractérisé en ce**
**que** les valeurs déterminées sont traitées au moyen d'un logiciel.

8. Procédé selon la revendication 1,
**caractérisé en ce**
**que** les valeurs déterminées sont évaluées au moyen d'une corrélation d'image.

9. Procédé selon la revendication 1,
**caractérisé en ce**
**que** les données sont détectées à un espacement entre la pale de rotor et le dispositif de réception d'environ 0,01 m - 10.000 m, de préférence à un espacement d'environ 30-60 m.

10. Dispositif pour mettre en oeuvre un procédé de contrôle de l'état structural d'installations éoliennes sous forme de roues éoliennes (1) présentant plusieurs pales de rotor (3, 4), selon au moins une des revendications 1-9,
**caractérisé par**
un hélicoptère, sur et/ou dans lequel une ou plusieurs caméras sont installées, qui servent à détecter par scannage les données de mesure de la pale de rotor (3, 4) respective, comportant une unité (11) pour mémoriser ces données, comportant une unité (12) pour évaluer ces données, comportant une unité logicielle pour traiter et/ou standardiser les données détectées et une unité (13) pour émettre les données évaluées.

11. Dispositif selon la revendication 10, **caractérisé en ce que** la caméra est réalisée comme une caméra thermique et/ou une caméra appropriée pour déterminer l'épaisseurs des pales de rotor (3, 4).

12. Dispositif selon la revendication 10,
**caractérisé en ce**
**que** l'hélicoptère est équipé d'un dispositif de nettoyage (22) des pales de rotor (3, 4).

13. Dispositif selon la revendication 10,
**caractérisé en ce**
**que** l'hélicoptère est équipé d'un dispositif de sollicitation des pales de rotor (3, 4) avec un liquide.

14. Dispositif selon la revendication 10,
**caractérisé en ce**
**que** l'hélicoptère est équipé d'un dispositif de sollicitation des pales de rotor (4) avec un vernis et/ou une vitrification.

15. Dispositif selon la revendication 10,
**caractérisé en ce**
**que** l'unité d'émission (13) comprend un dispositif de restitution optique des données.
